Europäisches Patentamt

European Patent Office

Office européen des brevets

(11) Publication number: **0 485 036 A1**

## EUROPEAN PATENT APPLICATION

(21) Application number: **91202888.3**

(22) Date of filing: **06.11.91**

(51) Int. Cl.⁵: **A01K 1/00**, F24F 13/06

(30) Priority: **06.11.90 NL 9002417**

(43) Date of publication of application:
**13.05.92 Bulletin 92/20**

(84) Designated Contracting States:
**BE DE ES FR GB IT NL**

(71) Applicant: **FANCOM B.V.**
**Industrieterrein 34**
**NL-5981 NK Panningen(NL)**

(72) Inventor: **Jansen, Gijs Cornelis**
**Korhoender 1**
**NL-5754 DD Deurne(NL)**

(74) Representative: **Smulders, Theodorus A.H.J.,**
**Ir.**
**Vereenigde Octrooibureaux, Nieuwe**
**Parklaan 97**
**NL-2587 BN Den Haag(NL)**

(54) **Ventilating device.**

(57) Ventilating device for a space (S), in particular a space for housing animals, comprising means (2) for generating a reduced pressure in the space (S) and means (3) for admitting fresh air to the space, wherein the outside-air inlet means (3) comprise two inlet apertures (5,6) variable in size which are substantially directed, on the one hand, towards the space above the animal level (AL) and, on the other, towards the animal level (AL).

FIG.3

This invention relates to a ventilating device for a space, in particular a space for housing animals, comprising means for generating a reduced pressure in the space and means for admitting fresh air to the space.

The purpose of such a ventilating system is to maintain the inside climate in a space or to improve it by replacing inside air with fresh air. When used in the agricultural sector, in particular in intensive stock farming, the purpose of ventilation is to influence the climate around the animals. This concerns mainly poultry farming (broilers, laying-hens, parent animals) and pig farming (fattening pigs, sows).

By ventilation, on the one hand, air is refreshed, whereby oxygen is supplied and carbon dioxide and ammonia are removed and, on the other hand, during hot spells, heat is removed from the environment of the animals. In addition to replacing air for the purposes referred to, ventilation can provide for a proper mixture of the air supplied and the inside air. Known mechanical ventilating devices of the type mentioned comprise controllable exhaust fans and fresh air inlet apertures.

The object of this invention is to improve controllability, in particular climate control in the direct environment of animals in the livestock or poultry house, using simple means, whereby all animals are provided with sufficient fresh air, without draught and without undue heat removal.

FR-A-2,643,413 (S.E.R.U.P.A.) discloses fresh air inlet means for producing different air currents in the space, arranged for guiding entering fresh air in different directions, which means comprise a tilting hatch.

This invention aims to provide such a ventilating device in which the guidance of the incoming air through a space, for instance a space for housing animals, can be carried out in a more controlled manner.

To that end, according to the invention, the fresh air inlet means comprise two inlet apertures variable in size which are substantially directed, on the one hand, towards the space above the animal level and, on the other, towards the animal level.

The ventilating device according to the invention enables the entering fresh air to be directed into different circulation patterns in a dosed manner, whereby the fresh air flows through the space above the animals first and is only then, mixed with inside air, distributed among the animals. When in that event the need for cooling in the environment of the animals becomes greater than the need for fresh air, the air circulation pattern is changed so that the incoming fresh air passed among the animals first, so that more heat is removed from the direct environment of the animals while the air in the housing space is still sufficiently refreshed.

In further elaboration of the invention, the fresh air inlet aperture of the inlet means can be varied at the same time. Thus, the flow rate of the incoming air can be varied, for instance depending on the temperature ratio of ouside air to inside air, so as to achieve optimum adjustment of the prevailing conditions in a particular housing space.

By means of the aperture which is directed towards the space above the animal level, an accurate control of the minimum or winter ventilation can be achieved, bringing about an air velocity and an air displacement pattern above the animals which provide for optimum mixture of cold fresh air and warm inside air before the colder outside air reaches the animals. By means of the other aperture, which is directed towards the animal level, an air diplacement pattern can be set which supplies fresh air directly to the animals. The temperature at animal level is then substantially equal to the temperature at entry, so that optimum cooling is obtained.

The animals can easily give off their heat because the air is passed among them at the lowest possible temperature and the lowest possible humidity depending on the conditions of the climate outside. The two separate air displacement patterns that can be realized with the device according to the invention can achieve their optimum effect because they do not occur simultaneously. In known systems in which only one displacement pattern is possible or in which different displacement patterns can occur simultaneously, there occurs cold drop or minimum ventilation control is poor.

Preferably, according to the invention, the two fresh air inlet apertures can be controlled simultaneously, such that the two apertures open and close in a certain ratio and with a delay relative to each other. It is thus ensured that except for a short switching interval, at any one time there is only one air displacement pattern present in the livestock or poultry house.

In a simple technical design of the inlet means, two slides can be controllably moved within a frame comprising two apertures disposed in planes of different inclination, which apertures can be closed by the slides, such that either the apertures are both closed or the opening of one aperture is accompanied by the closure of the other aperture.

For optimizing a selected air displacement, baffles or similar air guiding means may be arranged along the ceiling of the space.

To clarify the invention, one embodiment of the ventilating device will now be described, by way of example, with reference to the accompanying drawings, in which:

Figs 1 and 2 schematically show the two possible air current patterns in a space;

Fig. 3 is an enlarged schematic section of the air inlet means in the space according to Fig. 1;

Fig. 4 is an exploded perspective view of a detail of Fig. 3; and

Fig. 5 shows a sequence of slide movements in the air inlet means.

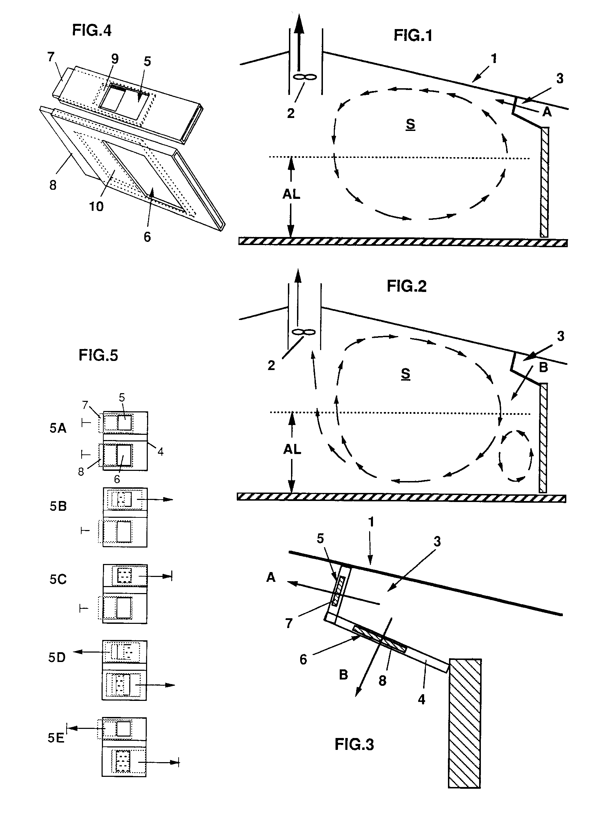

Referring to the drawings, in particular Figs 1 and 2, a house 1 has arranged therein a fan 2 for ventilating the housing space S, which fan 2 exhausts air from the house 1 in the direction of the arrow, while fresh fresh air is admitted via air inlet means collectively indicated at 3. By means of the air inlet means 3, to be discussed hereinafter, different air circulation currents can be generated, as shown in Figs 1 and 2.

As will appear from Figs 3 and 4, the air inlet means 3 comprise a frame 4 having provided therein two air inlet apertures 5 and 6, disposed in different planes so that incoming air flows in the direction of arrow A via the aperture 5 and in the direction of arrow B via the aperture 6.

For opening and closing the apertures 5 and 6, use can be made of slides 7 and 8 comprising an aperture 9, 10, respectively. The size of the apertures 5 and 6 can be controlled by causing the slide apertures 9, 10 to overlap the frame apertures 5 and 6 to a greater or lesser extent.

Indicated in housing space S in Figs 1 and 2 is a lower zone AL to be referred to as the animal level, i.e. the level at which the animals are arranged in the house. Depending on whether in frame 4 aperture 5 or aperture 6 is open, the reduced pressure generated in the housing space S by the fan 2 will lead to fresh air being admitted in the direction of either arrow A or arrow B, so that an air circulation pattern as shown in Figs 1 and 2 will automatically be set.

In a circulation pattern as shown in Fig. 1, the colder fresh air will first flow through the space above the animals, be mixed with the inside air and only then pass over the animals arranged in zone AL. If more cooling in the environment of the animals is required, the air circulation pattern according to Fig. 2 is set, so that the incoming fresh air is passed over the animals first, so that more heat is removed from the direct environment of the animals.

Since the air circulation patterns can only be set if only one of the apertures 5 or 6 is open, switching requires that the open aperture closes when the closed aperture is being opened.

Such a transition is shown in the diagram of Fig. 5.

Fig. 5A shows the situation where the two apertures 5 and 6 are closed. Fig. 5B shows the situation where aperture 5 is being opened and Fig. 5C shows the aperture 5 in the entirely opened condition, while the aperture 6 is still closed. Fig.

5D shows how the aperture 6 is being opened while aperture 5 is being closed simultaneously. Fig. 5E, finally, shows the aperture 6 in the completely opened position, while aperture 5 is completely closed.

It will be clear that the invention is not limited to the embodiment shown. Thus, air inlet means may be arranged at a different location in the house and they may be designed differently for control by means other than slides.

## Claims

1. A ventilating device for a space, in particular a space for housing animals, comprising means for generating a reduced pressure in the space and means for admitting fresh air to the space, characterized in that the outside-air inlet means (3) comprise two inlet apertures (5,6) variable in size which are substantially directed, on the one hand, towards the space above the animal level (AL) and, on the other, towards the animal level (AL).

2. A device according to claim 1, characterized in that the or each air inlet aperture (5,6) is variable at the fresh air inlet means (3).

3. A device according to claim 1 or 2, characterized in that the two fresh air inlet apertures (5,6) can be controlled simultaneously, whereby the apertures (5,6) open and close in a certain ratio and with a delay relative to each other.

4. A device according to claim 2 or 3, characterized by two slides (7,8) which can be moved controllably in a frame (4) comprising two apertures (5,6) disposed in planes of different inclination, which apertures (5,6) can be closed by the slides (7,8), whereby either both apertures (5,6) are closed or the opening of one aperture is accompanied by the closure of the other aperture.

FIG.4

FIG.1

FIG.2

FIG.5

FIG.3

5A
5B
5C
5D
5E

European Patent Office

**EUROPEAN SEARCH REPORT**

Application Number

EP    91 20 2888

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X,D | FR-A-2 643 413 (HAMON) | 1-3 | A01K1/00 |
| A | * the whole document * | 4 | F24F13/06 |
| | --- | | |
| A | US-A-3 830 146 (KAISER) | 4 | |
| | * abstract; figures 11,12 * | | |
| | --- | | |
| A | FR-A-1 157 502 (VIDAL) | 1-4 | |
| | ----- | | |

TECHNICAL FIELDS SEARCHED (Int. Cl.5 )

A01K
F24F

The present search report has been drawn up for all claims

| Place of search | Date of completion of the search | Examiner |
|---|---|---|
| THE HAGUE | 14 JANUARY 1992 | VON ARX V. U. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)